# FASCICULE DE BREVET EUROPEEN

(11) **EP 3 642 538 B1**
(45) Date de publication et mention de la délivrance du brevet: **27.07.2022**
(21) Numéro de dépôt: 18755859.8
(22) Date de dépôt: 20.06.2018
(51) Int. Cl.: F23R 7/00, F02C 5/12

(54) **SYSTÈME DE COMBUSTION À VOLUME CONSTANT COMPRENANT UN ÉLÉMENT D'OBTURATION TOURNANT À LUMIÈRES SEGMENTÉES**
VERBRENNUNGSSYSTEM MIT KONSTANTEM VOLUMEN MIT EINEM DREHBAREN VERSCHLUSSELEMENT MIT SEGMENTIERTEN ÖFFNUNGEN
CONSTANT VOLUME COMBUSTION SYSTEM COMPRISING A ROTATING CLOSURE ELEMENT WITH SEGMENTED APERTURES

(30) Priorité: 23.06.2017 FR 1755763
(43) Date de publication de la demande: 29.04.2020
(73) Titulaire: Safran, 75015 Paris (FR)
(72) Inventeur: LEYKO, Matthieu, 77550 Moissy-Cramayel (FR); METGE, Pierre Jean-Baptiste, 77550 Moissy-Cramayel (FR); CONETE, Eric, 77550 Moissy-Cramayel (FR); MECUSON, Gautier, 77550 Moissy-Cramayel (FR)
(74) Mandataire: Cabinet Beau de Loménie
(86) Numéro de dépôt international: PCT/FR2018/051494
(87) Numéro de publication internationale: WO 2018/234698

(56) Documents cités:
- WO-A1-2016/120551
- WO-A1-2016/120555
- FR-A1- 3 032 781
- US-A- 2 370 217
- US-A- 3 650 105
- US-A- 5 237 811

## Description

### Arrière-plan de l'invention

La présente invention concerne le domaine des chambres de combustion de turbomachines d'aéronef, du type à combustion à volume constant. L'invention s'applique à tout type de turbomachines, en particulier aux turboréacteurs, turbopropulseurs, et turbomachines à soufflantes non carénées, aussi connues sous le vocable anglo-saxon de « Open Rotor ».

Une turbomachine d'aéronef conventionnelle comporte de manière connue une ou plusieurs chambres de combustion. Une telle chambre de combustion est alimentée en air sous pression par un module de compresseur et il comporte un injecteur de carburant qui est apte à injecter du carburant dans le flux d'air admis pour le brûler et provoquer ainsi l'émission de gaz chauds qui sont utilisés pour entraîner une turbine, qui entraîne à son tour le module de compresseur et qui peut également entraîner une soufflante de la turbomachine.

Dans une telle chambre, le débit de carburant est continu et la combustion fonctionne selon un cycle dit de Brayton, c'est-à-dire selon un cycle de combustion à pression constante ou « CPC ». Néanmoins, pour obtenir des gains de consommation spécifiques, il a été envisagé de remplacer la chambre de combustion fonctionnant selon un cycle de Brayton par une pluralité de chambres de combustion fonctionnant selon un cycle de Humphrey, c'est-à-dire selon un cycle de combustion à volume constant ou « CVC ».

Le document WO 2016/120551 divulgue un module de combustion à volume constant comportant des chambres de combustion agencées autour d'un axe, chaque chambre comprenant un port d'admission de gaz comprimé et un port d'échappement de gaz brûlés, et une vanne rotative d'admission/d'échappement. Chaque port d'admission/d'échappement est configuré pour être ouvert ou fermé par la vanne rotative d'admission/d'échappement.

Pour utiliser ce type de module de combustion à volume constant dans une turbine à gaz de puissance élevée, il est souhaitable de disposer d'un nombre important de chambres de combustion (par exemple au moins trois). Dans certains cas, plusieurs des chambres doivent être synchronisées en fonctionnement, c'est-à-dire se trouver dans le même état au même moment. Dans une telle situation, la vanne rotative peut prendre la forme d'un cylindre pourvu de lumières s'étendant circonférentiellement sur une longueur prédéterminée, les lumières étant aptes à coopérer avec les ports d'admission et d'échappement de chaque chambre. Une telle vanne rotative présente ainsi des lumières qui peuvent avoir une taille importante en fonction du nombre de chambres de combustion à synchroniser et/ou de la taille desdites chambres. Une telle vanne peut en outre comprendre plusieurs de ces lumières sur une même portion annulaire de la vanne. Ces lumières réduisent ainsi fortement la raideur de la vanne, et donc sa tenue mécanique et sa fiabilité lorsqu'elle est entraînée en rotation dans la turbine à gaz.

### Objet et résumé de l'invention

La présente invention a donc pour but de permettre de s'affranchir des inconvénients précités en proposant un système de combustion à volume constant pour turbomachine selon l'objet de la revendication 1.

Selon l'invention, chaque segment s'étend seulement dans l'épaisseur de la paroi de la virole de l'élément d'obturation sélective. En d'autres termes, les segments ne dépassent pas de la paroi de la virole. Ou encore, chaque segment présente une longueur mesurée selon la direction radiale (par rapport à la direction axiale) qui est inférieure ou égale à l'épaisseur de la paroi de la virole de l'élément d'obturation sélective (mesurée également selon la direction radiale). Cette caractéristique permet une meilleure intégration du système de combustion à volume constant pour une turbomachine.

Dans un exemple de réalisation, les lumières d'admissions et d'échappement peuvent être présentes simultanément sur au moins une portion circonférentielle de la virole (c'est-à-dire être côte à côte sur une portion de la virole). La portion circonférentielle de la virole (c'est-à-dire une certaine portion angulaire de la virole) sur laquelle les lumières d'admission et d'échappement sont présentes simultanément correspond à une phase de balayage (où de l'air provenant d'un compresseur traverse la chambre de combustion pour la vider et la remplir de nouveau) lors du passage de ladite portion circonférentielle en regard d'une chambre de combustion, comme il sera expliqué plus loin.

Dans un exemple de réalisation, chaque segment de chaque lumière d'échappement peut présenter, dans un plan perpendiculaire à l'axe, un profil aérodynamique s'étendant entre un bord d'attaque et un bord de fuite, le bord d'attaque étant dirigé radialement vers l'extérieur par rapport au bord de fuite. Grâce à une telle disposition, on peut réduire les pertes aérodynamiques dues à la présence des segments dans chaque lumière d'échappement. En particulier, dans le cas d'une lumière d'échappement, le profil aérodynamique est orienté en fonction de la direction du flux de gaz traversant la lumière, c'est-à-dire radialement de l'extérieur vers l'intérieur de l'élément d'obturation sélective. Pour réduire l'influence sur le flux gazeux d'un seul segment, au moins un segment de la lumière d'échappement peut présenter un profil aérodynamique tel que défini ci-dessus.

Lorsque l'élément d'obturation sélective est entraîné en rotation, les différents segments d'une lumière d'échappement de ce dernier ne « voient » pas le même type de flux gazeux. En effet, les segments qui se trouveront d'un côté de la lumière d'échappement verront toujours un flux de gaz correspondant à une phase d'échappement d'une chambre de combustion, alors que des segments situés de l'autre côté de la lumière d'échappement verront toujours un flux de gaz correspondant à une phase de fin d'échappement ou de balayage d'une chambre de combustion. Ainsi, l'incidence du flux de gaz sur les profils aérodynamiques des segments varie d'un bord à l'autre de la lumière d'échappement, et notamment d'une incidence forte (forte pression et température) à une incidence plus faible (faible pression et température).

Afin de prendre en compte cette variation de l'incidence du flux de gaz en fonction de la position circonférentielle de chaque segment dans la lumière, il peut être avantageux que chaque lumière d'échappement soit segmentée uniformément par une pluralité de segments différents présentant chacun un angle d'attaque, l'angle d'attaque de chaque segment évoluant de façon strictement monotone d'un segment à l'autre le long de la lumière d'échappement. L'angle d'attaque peut être défini comme l'angle que fait la normale à la surface du segment prise en son bord d'attaque avec la normale à la face extérieure de la virole de l'élément d'obturation sélective prise au bord d'attaque du segment considéré.

En variante, chaque lumière d'échappement peut être segmentée uniformément par une pluralité de groupes de segments différents dont chaque segment d'un même groupe présente un angle d'attaque identique, l'angle d'attaque des segments d'un même groupe de segments évoluant de façon strictement monotone d'un groupe de segment à l'autre le long de la lumière d'échappement. Cette conception est plus simple à mettre en œuvre que la précédente, notamment car elle réduit le nombre de types de segments différents à prévoir.

Les dispositions avantageuses précédentes peuvent s'appliquer de façon similaire à chaque lumière d'admission, bien que les variations d'incidence dans le flux gazeux soient moindres que dans le cas de l'échappement.

Dans un exemple de réalisation, chaque segment de la lumière d'admission présente, dans un plan perpendiculaire à l'axe, un profil aérodynamique s'étendant entre un bord d'attaque et un bord de fuite, le bord d'attaque étant dirigé radialement vers l'intérieur par rapport au bord de fuite. Grâce à une telle disposition, on peut réduire les pertes aérodynamiques dues à la présence des segments dans chaque lumière d'admission. En particulier, dans le cas d'une lumière d'admission, le profil aérodynamique est orienté en fonction de la direction du flux de gaz traversant la lumière, c'est-à-dire radialement de l'intérieur vers l'extérieur de l'élément d'obturation sélective. Pour réduire l'influence sur le flux gazeux d'un seul segment, au moins un segment de la lumière d'admission peut présenter un profil aérodynamique tel que défini ci-dessus.

Dans un exemple de réalisation, le système de combustion peut comprendre en outre un guide d'admission fixe présent à l'intérieur de la virole de l'élément d'obturation sélective du côté de la première portion dudit élément d'obturation, le guide d'admission comportant un cylindre central prolongé radialement par un disque, le cylindre et le disque formant un déflecteur configuré pour guider l'air arrivant sur le guide d'admission en direction des ports d'admission des chambres de combustion. Grâce au guide d'admission, on optimise l'introduction d'un flux d'air frais dans chaque chambre de combustion.

Selon l'invention, l'élément d'obturation sélective comprend en outre une paroi s'étendant depuis la face interne de la virole dans une direction radiale et séparant les première et deuxième portions annulaires de la virole, ladite paroi comportant au moins une lumière de contournement s'étendant sur une zone angulaire située en dehors des zones angulaires sur lesquelles s'étendent ladite au moins une lumière d'admission et ladite au moins une lumière d'échappement, ladite au moins une lumière de contournement étant segmentée angulairement par au moins un segment s'étendant selon une direction radiale par rapport à l'axe. Grâce à la présence d'une ou plusieurs lumières de contournement sur l'élément d'obturation sélective, il est possible d'avoir en permanence un écoulement d'air dans le module de combustion, cet écoulement d'air contournant les chambres de combustion. Par conséquent, avec un écoulement d'air permanent entre le volume tampon en amont du système de combustion (sortie du compresseur) et la sortie du système de combustion (alimentation de la turbine), on réduit les fluctuations de débit et de pression dans le système de combustion, ce qui permet d'améliorer la fluidité de la charge sur un compresseur présent en amont du système de combustion ainsi que le rendement d'une turbine placée en aval du système de combustion. En outre, la ou les lumières de contournement étant présentes sur l'élément en rotation du système de combustion, l'écoulement d'air est distribué régulièrement sur différentes parties du système de combustion, ce qui permet de purger ces parties des gaz brulées et de les refroidir régulièrement.

Dans ce cas, et lorsque le système de combustion comprend un guide d'admission fixe tel que définit ci-avant, le guide d'admission fixe peut comporter en outre une pluralité de lumières aptes à coopérer avec chaque lumière de contournement de la paroi de l'élément d'obturation sélective.

Dans un exemple de réalisation, chaque chambre de combustion peut être délimitée par une enceinte, un fond arrière fermé solidaire de l'enceinte et un anneau cylindrique sur la face externe duquel l'enceinte est fixée, l'anneau cylindrique formant un fond avant de chaque chambre de combustion, l'anneau cylindrique comportant une première série de lumières formant chacune un port d'admission d'une chambre de combustion et une deuxième série de lumières formant chacune un port d'échappement d'une chambre de combustion, le système comprenant en outre un collecteur d'échappement fixe qui s'étend de manière annulaire à l'intérieur de la virole de l'élément d'obturation sélective le long de la deuxième portion de ladite virole, le collecteur d'échappement comportant une pluralité de caissons cloisonnés présents chacun au niveau d'un port d'échappement d'une chambre de combustion. Une telle conception facilite la fabrication des chambres de combustion et leur distribution annulaire autour de l'axe du système de combustion. Grâce à ce collecteur d'échappement cloisonné, l'échappement d'une chambre de combustion est indépendant des autres chambres de combustion, ce qui permet de réduire les retours de gaz chauds sous pression d'une chambre vers une autre, en particulier lors d'une phase de balayage d'une chambre de combustion.

Dans ce cas, chaque lumière de la deuxième série de lumières peut être séparée circonférentiellement de sa voisine d'une distance non nulle, la lumière d'échappement comprenant une pluralité de segments répartis uniformément dans ladite lumière et séparés entre eux d'une distance inférieure ou égale à la distance séparant deux lumières de la deuxième série de lumières. Avec une telle disposition, on réduit encore la possibilité de retours de gaz chauds d'une chambre vers l'autre, en particulier lors d'une phase de balayage d'une chambre de combustion. En effet, la segmentation de la lumière d'échappement de la sorte permet d'éviter que du gaz ne traverse d'une chambre à l'autre en passant par l'épaisseur de la lumière d'échappement.

Un système de combustion selon l'invention peut comprendre dix chambres de combustion réparties de manière annulaire autour de l'axe, la virole de l'élément d'obturation sélective comportant deux lumières d'admission diamétralement opposées sur la première portion annulaire et deux lumières d'échappement diamétralement opposées sur la deuxième portion annulaire de ladite virole, la paroi de l'élément d'obturation sélective comportant deux lumières de contournement s'étendant sur une zone angulaire située en dehors des zones angulaires sur lesquelles s'étendent les deux lumières d'admission et les deux lumières d'échappement.

De préférence, l'élément d'obturation sélective peut être réalisé en l'un des matériaux suivants : matériau métallique, matériau composite à matrice céramique et matériau céramique eutectique.

L'invention a également pour objet une turbomachine comprenant un compresseur axial ou centrifuge et une turbine axiale ou centripète, la turbomachine comprenant en outre un système de combustion selon l'invention, le système de combustion étant présent entre le compresseur et la turbine.

L'invention a encore pour objet un aéronef comprenant au moins un turbopropulseur, le turbopropulseur comprenant une turbomachine selon l'invention.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique en coupe longitudinale d'une turbomachine comprenant un système de combustion conformément à un mode de réalisation de l'invention,
- la figure 2A est une vue schématique en perspective éclatée du système de combustion de la figure 1,
- la figure 2B est une vue agrandie au niveau du repère IIB de la figure 2A,
- les figures 3A et 3B sont des vues schématiques en perspective de l'élément d'obturation sélective du système de combustion de la figure 1,
- les figures 4 et 5 sont respectivement des vues en coupe selon un plan perpendiculaire à l'axe XX' de trois segments d'une lumière d'admission et de trois segments d'une lumière d'échappement,
- la figure 6 est une vue en coupe selon un plan perpendiculaire à l'axe XX' d'une lumière d'échappement,
- la figure 7 illustre les différents angles d'attaque de groupes de segments d'une lumière d'échappement tels qu'identifiés sur la figure 6,
- les figures 8A à 8D sont des vues en perspective du collecteur d'échappement du système de combustion de la figure 1,
- la figure 9 est une vue schématique en perspective des chambres de combustion et de l'élément d'obturation sélective du système de combustion de la figure 1,
- la figure 10 est vue schématique développée montrant les positions relatives entre les ports d'admission et d'échappement de plusieurs chambres de combustion, une lumière d'admission et une lumière d'échappement de l'élément d'obturation sélective dans la position du système de combustion illustré sur la figure 9,
- la figure 11 est une vue schématique en coupe développée au niveau de l'échappement de quatre chambres de combustion dans la position du système de combustion illustré sur la figure 9,
- la figure 12 est un tableau montrant les différentes phases du cycle de Humphrey de chaque chambre de combustion en fonction de la position angulaire ou de rotation de l'élément d'obturation du système de combustion de la figure 1.

### Description détaillée de l'invention

L'invention s'applique d'une manière générale à une turbomachine comprenant un compresseur axial ou centrifuge et d'une turbine axiale ou centripète.

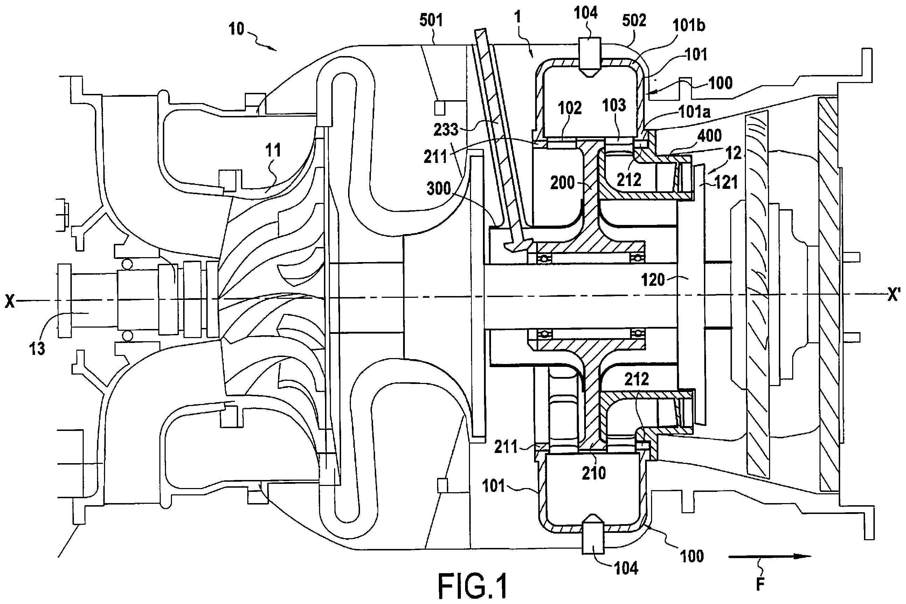

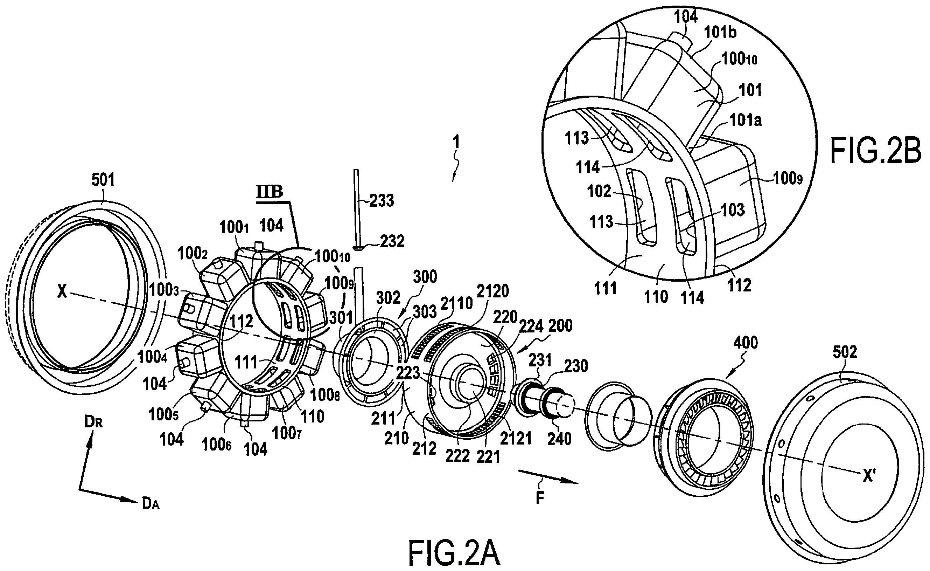

Les figures 1, 2A à 2B illustrent un système de combustion 1 conformément à un mode de réalisation de l'invention. Dans l'exemple décrit ici et tel que représenté sur la figure 1, le système de combustion 1 est intégré dans une turbomachine ou turbomoteur 10 pour turbopropulseur, le système de combustion étant placé dans le turbomoteur en aval d'un compresseur axialo-centrifuge 11 et en amont d'une turbine axiale 12, le compresseur 11 et la turbine 12 étant reliés entre eux par un système d'arbres 13. La turbine 12 comprend une roue mobile 120 reliée en son centre au système d'arbres 13 et comportant à son extrémité radiale externe une pluralité d'aubes 121.

Le système de combustion 1 comprend une pluralité de chambres de combustion, dans le mode de réalisation décrit ici 10 chambres de combustion 100, dénombrées 100₁ à 100₁₀ sur la figure 2A, réparties de manière annulaire autour d'un axe XX' définissant une direction axiale DA. Chaque chambre de combustion 100 est délimitée par une enceinte 101, ici de forme sensiblement parallélépipédique, un fond arrière fermé 101b solidaire de l'enceinte 101 et un anneau cylindrique 110 sur la face externe 112 duquel l'enceinte 101 est fixée par exemple par soudage, brasage, liaison mécanique (vis-écrou) ou collage lorsque les enceintes 101 et l'anneau cylindrique 110 sont réalisés en matériau métallique. L'anneau cylindrique 110 et les enceintes 101 peuvent être également réalisés en matériau composite à matrice céramique (CMC), c'est-à-dire un matériau formé d'un renfort en fibres de carbone ou céramique densifié par une matrice au moins partiellement céramique.

L'anneau cylindrique 110 forme le fond avant 101a de chaque chambre de combustion qui est situé au plus près de l'axe XX' dans une direction opposé au fond arrière 101b suivant une direction radiale DR. L'anneau cylindrique 110 comporte une première série de lumières 113 formant chacune un port d'admission 102 d'une chambre de combustion 100 et une deuxième série de lumières 114 formant chacune un port d'échappement 103 d'une chambre de combustion 100 (figure 2B). Le fond avant 101a de chaque chambre de combustion 100 comporte ainsi un port d'admission 102 et un port d'échappement 103. La face interne 111 de l'anneau cylindrique 110, qui comporte les ports d'admission et d'échappement de chaque chambre de combustion, est destinée à être placée en regard d'une virole d'un élément d'obturation sélective décrit ci-après en détails. Les enceintes 101 des chambres de combustion s'étendent depuis la face externe 112 de l'anneau 110 dans la direction radiale DR. Dans l'exemple décrit ici, chaque chambre de combustion 100 est en outre munie d'un injecteur 104 de carburant placé ici sur le fond arrière 101b de chaque chambre 100. L'injection peut être également mise en œuvre au moyen d'une roue d'injection (non représentée sur les figures 2A et 2B). La combustion peut être initiée de façon connue soit par un allumeur à étincelle (bougie), soit par un allumeur thermique à gaz (non représentés sur les figures 2A et 2B). Si les conditions le permettent, la combustion peut également être initiée par recirculation des gaz d'échappement, ou RGE, comme dans un moteur diesel.

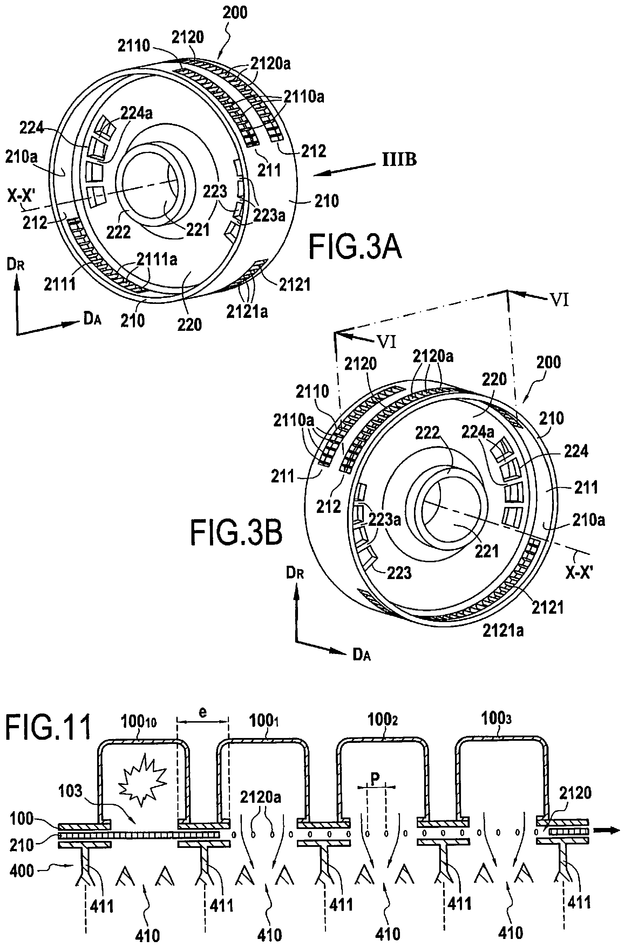

Le système de combustion 1 comprend également un élément d'obturation sélective 200 mobile en rotation autour de l'axe XX' par rapport aux chambres de combustion 100. L'élément d'obturation sélective 200 comprend une virole 210 en regard des ports d'admission et d'échappement 102 et 103 des chambres de combustion 100. La virole 210 est divisée en une première portion annulaire 211 et une deuxième portion annulaire 212 s'étendant chacune sur toute la circonférence de la virole 210 (figures 3A et 3B). La première portion annulaire 211 comporte au moins une lumière d'admission destinée à coopérer avec le port d'admission 102 de chaque chambre de combustion 100 lors de la rotation de l'élément d'obturation sélective 200. Dans l'exemple décrit ici, la première portion annulaire 211 comporte deux lumières d'admission 2110 et 2111 décalées angulairement de 180° le long de la première portion. La deuxième portion annulaire 212 comporte au moins une lumière d'échappement destinée à coopérer avec le port d'échappement 103 de chaque chambre de combustion 100 lors de la rotation de l'élément d'obturation sélective 200. Dans l'exemple décrit ici, la deuxième portion annulaire 212 comporte deux lumières d'échappement 2120 et 2121 décalées angulairement de 180° le long de la deuxième portion. Le début de chaque lumière d'admission 2110, 2111 est aligné angulairement respectivement avec le début de chaque lumière d'échappement 2120 et 2121, les lumières d'échappement s'étendant sur une longueur circonférentielle plus grande que les lumières d'admission. L'élément d'obturation sélective peut être réalisé en matériau métallique ou en matériau composite CMC.

Conformément à l'invention, chaque lumière d'admission 2110, 2111 et chaque lumière d'échappement 2120, 2121 est segmentée par au moins un segment s'étendant dans chaque lumière selon la direction axiale DA. En particulier, la première et la deuxième lumières d'admission 2110 et 2111 sont segmentées respectivement par une pluralité de segments 2110a et 2111a uniformément répartis circonférentiellement (par rapport à l'axe XX') dans lesdites lumières. La première et la deuxième lumières d'échappement 2120 et 2121 sont segmentées respectivement par une pluralité de segments 2120a et 2121a uniformément répartis circonférentiellement dans lesdites lumières. Ces segments permettent de renforcer la tenue mécanique de l'élément d'obturateur sélective 200.

Selon une disposition avantageuse de l'invention, les segments 2110a, 2111a, 2120a et 2121a présentent, dans un plan perpendiculaire à l'axe XX', un profil aérodynamique s'étendant entre un bord d'attaque et un bord de fuite. Cette configuration permet de réduire les perturbations aérodynamiques induites par la présence des segments dans les lumières d'admission et d'échappement.

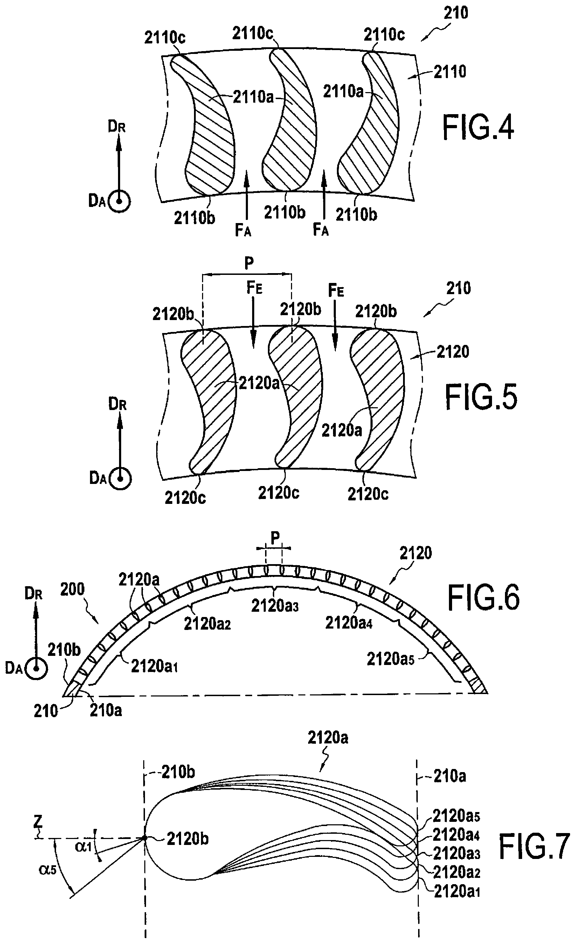

Comme illustré sur la figure 4, les segments 2110a de la première lumière d'admission 2110 présentent, dans un plan perpendiculaire à la direction DA, un profil aérodynamique s'étendant entre un bord d'attaque 2110b et un bord de fuite 2110c, le bord d'attaque 2110b étant dirigé radialement vers l'intérieur (c'est-à-dire dirigé vers l'axe XX'), de façon à faire face au flux d'air d'admission FA dans une chambre de combustion 100 lorsque cette dernière est dans une phase de balayage.

Comme illustré sur la figure 5, les segments 2120a de la première lumière d'échappement 2120 présentent, dans un plan perpendiculaire à la direction DA, un profil aérodynamique s'étendant entre un bord d'attaque 2120b et un bord de fuite 2120c, le bord d'attaque 2110b étant dirigé radialement vers l'extérieur (c'est-à-dire dirigé à l'opposé de l'axe XX'), de façon à faire face au flux d'air d'échappement FE dans une chambre de combustion 100 lorsque cette dernière est en phase d'échappement ou de balayage.

Selon une disposition avantageuse de l'invention illustrée sur les figures 6 et 7, chaque lumière d'échappement 2120 est segmentée uniformément par une pluralité de groupes de segments différents 2120a₁, 20120a₂, 20120a₃, 2120a₄, 2120a₅, dont chaque segment 2120a d'un groupe de segment présente un angle d'attaque identique, l'angle d'attaques des segments d'un même groupe de segment évoluant de façon strictement monotone d'un groupe de segment à l'autre le long de la lumière d'échappement 2120. En particulier, l'angle d'attaque des segments du groupe 2120a₁ est strictement inférieur à celui des segments du groupe 20120a₂ et ainsi de suite jusqu'au dernier groupe 20120a₅ de segments. Cette disposition permet de prendre en compte les variations dans l'incidence du flux gazeux à l'échappement entre les différentes phases de façon à réduire encore l'impact la présence des segments dans le flux gazeux.

L'angle d'attaque α correspond, comme illustré sur la figure 7, à l'angle que forme la normale au bord d'attaque 2120b d'un segment 2120a avec la normale Z à la face externe 210b de la virole 210 prise au niveau du bord d'attaque 2120b de chaque segment 2120a. On a représenté sur la figure 7 les segments 2120a superposés au niveau de leur bord d'attaque 2120b pour comparer leurs angles d'attaque. On voit que l'angle d'attaque α1 du groupe de segments situé à l'opposé de la lumière d'admission 2110 est plus important que l'angle d'attaque α5 du groupe de segments situé du côté de la lumière d'admission (seuls deux angles extrêmes ont été représentés pour une question de lisibilité).

Cette variation monotone de l'angle d'attaque est adaptée en fonction du sens de rotation de l'élément d'obturation 200 dans la turbomachine 10 et de la position de la lumière d'admission 2110. En particulier, on peut veiller à ce que les segments 2120b qui « voient » un flux de gaz avec une incidence importante, comme c'est le cas au début d'une phase d'échappement, présentent un angle d'attaque α important. A l'inverse, les segments 2120b qui seront disposés dans un flux avec une incidence plus faible, par exemple lors du balayage et en fin de balayage, pourront présenter un angle d'attaque α plus faible.

Dans une variante non illustrée, chaque segment peut présenter un angle d'attaque différent de celui de son voisin. Bien entendu, tout ce qui a été décrit ci-avant pour la première lumière d'échappement 2120, s'applique de manière identique à la deuxième lumière d'échappement 2121. On notera qu'une disposition similaire peut être prévue pour les segments 2110a et 2111a des lumières d'admission 2110 et 2111, mais que l'impact des segments s'avère moindre car les variations dans le flux gazeux d'admission sont beaucoup moins importantes que celles dans le flux gazeux d'échappement.

Le système de combustion 1 comprend en outre un guide d'admission fixe 300 présent à l'intérieur de la virole 210 de l'élément d'obturation 200 du côté de la première portion 211 de l'élément d'obturation (figure 2A). Le guide d'admission 300 comprend un cylindre central 301 prolongé radialement par un disque 302, le cylindre 301 et le disque 302 formant un déflecteur pour l'air d'admission issu par exemple d'un compresseur 11 disposé en amont du système de combustion. Le déflecteur ainsi formé permet de guider l'air arrivant sur le guide d'admission en direction des ports d'admission des chambres de combustion. Le guide d'admission 300 comporte ici une pluralité de lumières 303 présentes sur le disque 302 dont la fonction est définie ci-après. Selon une variante de réalisation du guide d'admission, celui-ci ne comprend pas de lumières 303, le disque 302 s'arrêtant en dessous des lumières de contournement 223 et 224 présentes sur l'élément d'obturation sélective 200. Le guide d'admission 300 peut être réalisé en matériau métallique ou en matériau composite CMC.

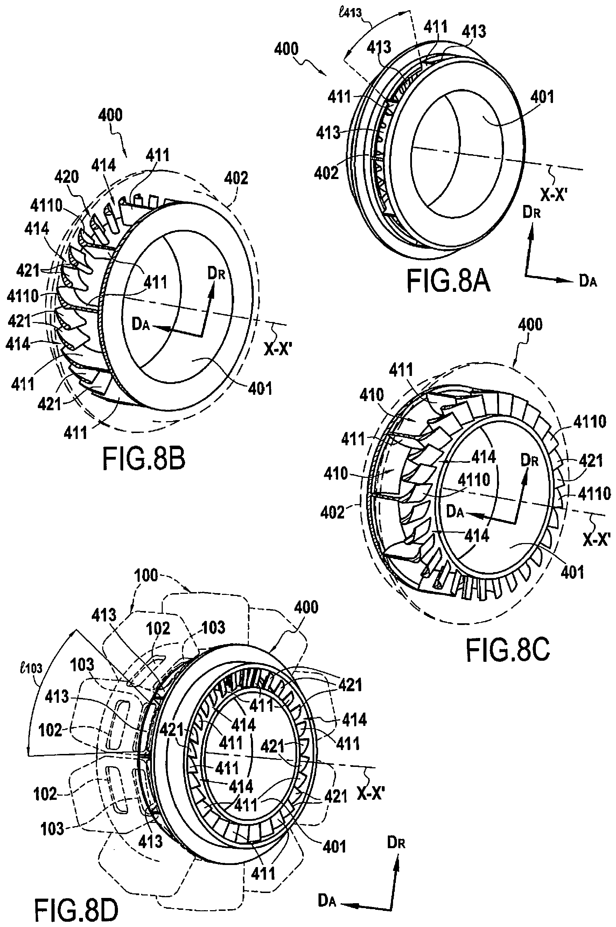

Dans l'exemple décrit ici, le système de combustion 1 comprend en outre un collecteur d'échappement fixe 400 qui présente une forme annulaire (figure 1). Le collecteur d'échappement 400 s'étend partiellement à l'intérieur de la virole 210 de l'élément d'obturation sélective du côté et le long de la deuxième portion 212 de ladite virole (figure 8D).

Comme illustré sur les figures 8A à 8D, le collecteur d'échappement 400 comporte une virole interne 401 et une virole externe 402 entre lesquelles une pluralité de caissons cloisonnés 410 est répartie de manière annulaire, chaque caisson étant placé en vis-à-vis d'un port d'échappement 103 d'une chambre de combustion 100 (figure 8D). Plus précisément, chaque caisson cloisonné 410 est délimité par deux parois ou cloisons radiales 411 qui s'étendent dans la direction radiale DR entre les viroles interne et externe 401 et 402, les portions des viroles interne et externe 401 et 402 présentes entre deux cloisons 411 formant respectivement les cloisons interne et externe des caissons 410. La virole externe 402 comporte une pluralité d'ouvertures 413 correspondant chacune à une première ouverture de chaque caisson cloisonnés 410. Chaque première ouverture 413 est présente en vis-à-vis d'un port d'échappement 103 d'une chambre de combustion 100, la longueur I₄₁₃ de la première ouverture 413 (figure 8A) étant supérieure ou égale à la longueur I₁₀₃ du port d'échappement 103 (figure 8D). Dans l'exemple décrit ici, puisque le système de combustion comprend 10 chambres de combustion, le collecteur d'échappement 400 comprend 10 caissons 410. Les cloisons 411 définissent en outre entre elles une deuxième ouverture 414, en aval de la première ouverture 413 et du port d'échappement 103. Les termes "amont" et "aval" sont utilisés ici en référence au sens d'écoulement du flux gazeux dans le système de combustion (flèche F sur la figure 1). La deuxième ouverture 414 définit la direction d'échappement des gaz brûlés éjectés de chaque port d'échappement 103 quand une chambre de combustion 100 est en phase d'échappement. Plus précisément, les gaz brulés évacués par la deuxième ouverture 414 d'un caisson 410 du collecteur d'échappement 400 débouchent en aval du système de combustion suivant une direction sensiblement parallèle à l'axe XX' et dans une fraction de volume indépendante des autres fractions de volumes dans lesquelles débouchent les ouvertures 414 des autres caissons 410. Lorsqu'une turbine est présente en aval du système de combustion à volume constant 1, comme par exemple la turbine 12 illustrée sur la figure 1, celle-ci reçoit systématiquement les gaz brûlés issus des chambres de combustion 100 les caissons 410 empêchant le retournement de l'écoulement des gaz dans les chambres en phase de balayage.

Dans l'exemple décrit ici, les cloisons 411 s'étendent quasiment sur toute la largeur de la surface externe de la virole interne 401 et de la surface interne de la virole externe 402 suivant la direction axiale DA.

En outre, dans l'exemple décrit ici mais de manière non limitative, l'extrémité 4110 de chaque cloison présente profil aérodynamique courbé par rapport à la direction axiale XX', ce qui permet de dévier les gaz brûlés issus des chambres de combustion 100 dans une direction non parallèle avec l'axe XX'. L'angle de déviation de la direction des gaz brûlés est défini par la courbure des extrémités 4110 des cloisons 411. Il peut être notamment déterminé afin d'optimiser le rendement du système de combustion vis-à-vis de la turbine placée en aval de celui-ci. Dans le système de combustion de l'invention, les cloisons 411 peuvent également présenter un profil rectiligne entre leurs deux extrémités.

Toujours dans l'exemple décrit ici et de manière non limitative, le collecteur d'échappement 400 comprend en outre une pluralité d'aubes ou aubages fixes 420 présentes en aval des caissons 410, un ou plusieurs aubes (ici deux) étant uniformément réparties entre les cloisons 411. Les aubages fixes 420 présentent chacune un profil aérodynamique courbé 421 par rapport à la direction axiale XX', le profil 421 des aubes 420 présentant de préférence une courbure (sens et angle de courbure) similaire à celle des extrémités 4110 des cloisons 411.

Les aubages fixes 420 avec les cloisons 411 jouent le rôle de distributeur pour les gaz issus du système de combustion. Le collecteur d'échappement peut être réalisé en matériau métallique ou en matériau composite CMC.

Selon une disposition avantageuse de l'invention, l'élément d'obturation sélective 200 comprend en outre une paroi 220 s'étendant dans la direction radiale DR (c'est-à-dire perpendiculairement à l'axe XX') depuis la face interne 210a de la virole, la paroi 220 séparant les première et deuxième portions annulaires 211 et 212 de la virole 210 (figures 3A et 3B). La paroi 220 présente une ouverture centrale circulaire 221 dont le bord est délimité par un cylindre 222. Le cylindre 222 est monté du côté amont sur un premier palier à roulement 230 solidaire du cylindre 220, le premier palier 230 est muni d'une roue dentée 231 en prise avec un pignon 232 monté sur un arbre d'entrainement 233 (figure 2A). Le cylindre 222 comprend du côté aval un deuxième palier à roulement 240. La mise en rotation de l'élément d'obturation est ici commandée par l'arbre d'entrainement 233 qui est relié à un moteur externe au système de combustion (non représenté sur la figure 2A), l'arbre 233 traversant le guide d'admission 300.

Selon l'invention, l'élément d'obturation sélective comprend une ou plusieurs lumières de contournement. Plus précisément, dans le mode de réalisation décrit ici, la paroi 220 de l'élément d'obturation 200 comprend des première et deuxième lumières de contournement 223 et 224 qui sont disposées de manière diamétralement opposée sur la paroi 220 (figures 3A et 3B). Chaque lumière de contournement s'étend sur une zone angulaire située en dehors des zones angulaires sur lesquelles s'étendent la ou les lumières d'admission et d'échappement. Dans l'exemple décrit ici les première et deuxième lumières de contournement 223 et 224 s'étendent respectivement sur des zones angulaires situées entre les zones angulaires sur lesquelles s'étendent les premières lumières d'admission et d'échappement 2110 et 2120, d'une part, et les deuxièmes lumières d'admission et d'échappement 2111 et 2121 d'autre part. Afin de renforcer la paroi 220 et l'élément d'obturation sélective 200, chaque lumière de contournement 223 et 224 peut être segmentée respectivement par une pluralité de segments 223a et 224a (figures 3A et 3B). Les segments 223a et 224a s'étendent selon une direction radiale DR par rapport à l'axe XX' et segmentent angulairement les lumières de contournement 223a et 223b. Dans l'exemple illustré, les segments 223a et 224a sont répartis angulairement de façon uniforme dans la lumière de contournement 223 et 224 correspondante.

Les chambres de combustion 100, l'élément d'obturation sélective 200, le guide d'admission 300 et le collecteur d'échappement 400 sont montés à l'intérieur d'un carter 500 formé en deux parties 501 et 502.

L'élément d'obturation sélective 200 est le seul élément mobile en rotation dans le système de combustion 1. Lors de sa rotation, l'élément d'obturation 200 va ouvrir et fermer sélectivement les ports d'admission et d'échappement 102 et 103 de chaque chambre de combustion afin de mettre en oeuvre une combustion à volume constant selon le cycle de Humphrey, c'est-à-dire comportant un temps de combustion, un temps d'échappement, et un temps d'admission d'air frais et de balayage des gaz brûlés. Plus précisément, comme illustré sur les figures 5 et 6, en fonction de l'angle de rotation de l'élément d'obturation sélective et, par conséquent, de la position des lumières d'admission et d'échappement présentes sur la virole de l'élément d'obturation 200, certaines chambres de combustion 100 sont dans la phase de balayage, d'autre dans la phase d'échappement et encore d'autres dans la phase de combustion. La figure 6 illustre les phases des chambres 100₁ à 100₅ lorsque le début des premières lumières d'admission et d'échappement 2111 et 2121 présentes sur la virole 210 de l'élément d'obturation 200 est aligné avec le début des ports d'admission et d'échappement 102, 103 de la chambre 100₁. La lumière 2111 s'étend ici sur une longueur I₂₁₁₀ couvrant à la fois un port d'admission d'une première chambre, ici la chambre 100₁, et un port d'admission d'une deuxième chambre, ici la chambre 100₂, adjacente à la première chambre. La lumière d'échappement 2121 s'étend sur une longueur I₂₁₂₁ couvrant 3 chambres de combustion consécutive, ici les chambres 100₁, 100₂ et 100₃. Le début des lumières d'admission et d'échappement 2111 et 2121 sont alignées sur la virole 210 suivant la direction axiale DA.

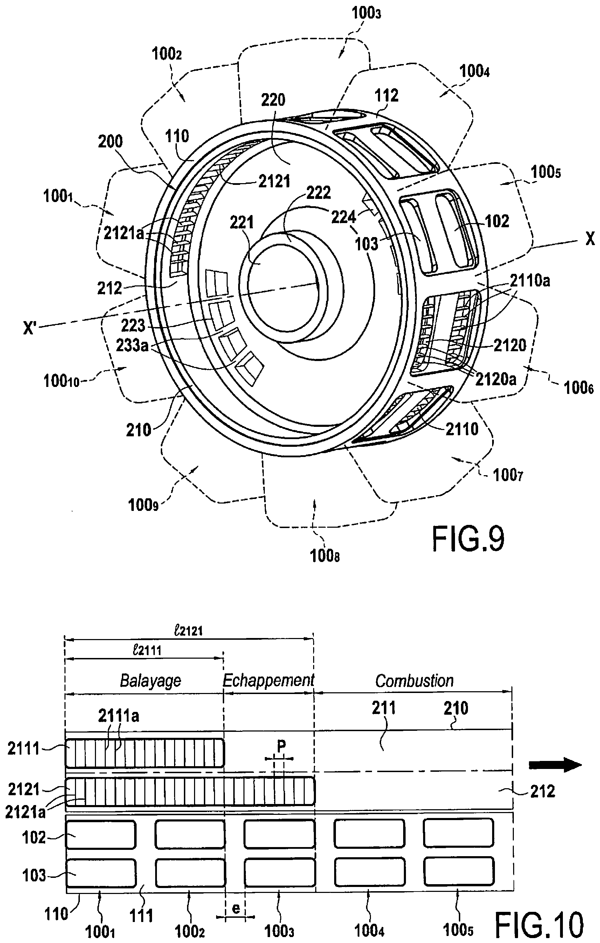

Dans la position angulaire ou de rotation de la virole 210 illustrée sur les figures 10 et 11, les chambres de combustion 100₁ et 100₂ sont en phase de balayage car les lumières d'admission et d'échappement 2111 et 2121 ouvrent totalement les ports d'admission et d'échappement 102 et 103 des chambres 100₁ et 100₂. La chambre 100₃ est dans une phase d'échappement, son port d'admission 102 étant totalement fermé par la virole 210 tandis que son port d'échappement 103 est totalement ouvert par la lumière d'échappement 2121. Enfin, les chambres de combustion 100₄ et 100₅ sont toutes les deux dans une phase de combustion, leurs ports d'admission et d'échappement étant totalement fermés par la virole 210.

Selon l'invention, et comme illustré notamment sur les figures 10 et 11, les lumières d'échappement 103 sont séparées l'une de l'autre d'une distance e non nulle et les segments 2121a de la deuxième lumière d'échappement 2121 sont séparés entre deux d'une distance P inférieure ou égale à la distance e, par exemple inférieure ou égale à 0,5e. Dans l'exemple illustré, P=0,5e. La figure 11 montre une vue schématique en coupe (selon un plan perpendiculaire à la direction DA) développée du système de combustion 1 au niveau des ports d'échappement 103 de chambres de combustion 100₁₀, 100₁, 100₂, 100₃. Cette figure permet de mieux comprendre les avantages d'une telle disposition. On peut voir le collecteur d'échappement 400 cloisonné par des cloisons radiales 411, ainsi que les ports d'échappement 103 qui font face aux caissons 410 du collecteur 400. Comme sur les figures 9 et 10, la chambre 100₁₀ est en début de phase de combustion, les chambres 100₁ et 100₂ sont en phase de balayage, et la chambre 100₃ est en phase d'échappement. L'élément d'obturation 200 présente une épaisseur non nulle par laquelle des gaz pourraient passer d'une chambre à l'autre. Comme la lumière d'échappement 2121 est segmentée par les segments 2121a, le risque que des gaz issus de la chambre 100₃ soient déviés vers la chambre 100₂ à cause de la surpression est encore réduit.

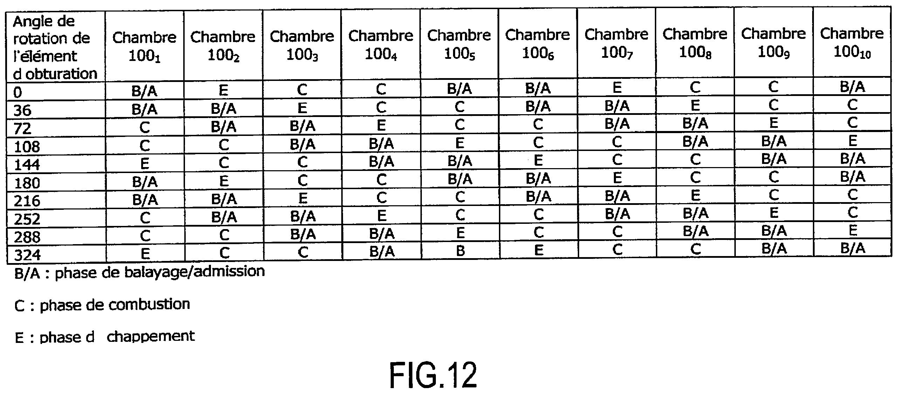

La figure 12 est un tableau montrant les différentes phases du cycle de Humphrey de chaque chambre de combustion 100₁ à 100₁₀ en fonction de la position angulaire θ ou de rotation de l'élément d'obturation 200.

## Revendications

1. Système de combustion à volume constant (1) pour turbomachine (10) comprenant :
une pluralité de chambres de combustion (100) réparties de manière annulaire autour d'un axe (XX') définissant une direction axiale (DA), chaque chambre de combustion comprenant un port d'admission (102) et un port d'échappement (103),
un élément d'obturation sélective (200) mobile en rotation autour de l'axe par rapport aux chambres de combustion, l'élément d'obturation sélective comprenant une virole (210) en regard des ports d'admission et d'échappement des chambres de combustion, la virole comportant sur une première portion annulaire (211) au moins une lumière d'admission (2110, 2111) destinée à coopérer avec le port d'admission de chaque chambre de combustion lors de la rotation de l'élément d'obturation sélective et sur une deuxième portion annulaire (212) au moins une lumière d'échappement (2120, 2121) destinée à coopérer avec le port d'échappement de chaque chambre de combustion lors de la rotation de l'élément d'obturation sélective, chaque lumière d'admission et chaque lumière de d'échappement s'étendant sur une longueur déterminée dans une direction circonférentielle par rapport à l'axe,
**caractérisé en ce que** chaque lumière d'admission et chaque lumière d'échappement sont segmentées par au moins un segment (2110a, 2111a, 2120a, 2121a) s'étendant dans chaque lumière selon la direction axiale (DA), **en ce que** chaque segment d'étend seulement dans l'épaisseur de la paroi de la virole de l'élément d'obturation sélective, et **en ce que** l'élément d'obturation sélective (200) comprend en outre une paroi (220) s'étendant depuis la face interne (210a) de la virole (210) dans une direction radiale (DR) et séparant les première (211) et deuxième (212) portions annulaires de la virole, ladite paroi comportant au moins une lumière de contournement (223, 224) s'étendant sur une zone angulaire située en dehors des zones angulaires sur lesquelles s'étendent ladite au moins une lumière d'admission (2110, 2111) et ladite au moins une lumière d'échappement (2120, 2121), ladite au moins une lumière de contournement étant segmentée angulairement par au moins un segment (223a, 224a) s'étendant selon une direction radiale par rapport à l'axe (XX').

2. Système selon la revendication 1, dans lequel chaque segment (2120a, 2121a) de chaque lumière d'échappement présente, dans un plan perpendiculaire à l'axe (XX'), un profil aérodynamique s'étendant entre un bord d'attaque (2120b, 2121b) et un bord de fuite (2120c, 2121c), le bord d'attaque étant dirigé radialement vers l'extérieur par rapport au bord de fuite.

3. Système selon la revendication 2, dans lequel chaque lumière d'échappement (2120) est segmentée uniformément par une pluralité de groupes de segments (2120a₁-2120a₅) différents dont chaque segment (2120a) d'un même groupe présente un angle d'attaque (a) identique, l'angle d'attaque des segments d'un même groupe de segments évoluant de façon strictement monotone d'un groupe de segment à l'autre le long de la lumière d'échappement.

4. Système selon la revendication 2, dans lequel chaque lumière d'échappement (2120) est segmentée uniformément par une pluralité de segments (2120a) présentant chacun un angle d'attaque (a) différent, l'angle d'attaque de chaque segment évoluant de façon strictement monotone d'un segment à l'autre le long de la lumière d'échappement.

5. Système selon l'une quelconque des revendications 1 à 4, dans lequel chaque segment (2110a, 2111a) de la lumière d'admission (2110, 2111) présente, dans un plan perpendiculaire à l'axe (XX'), un profil aérodynamique s'étendant entre un bord d'attaque (2110b, 2111b) et un bord de fuite (2110c, 2111c), le bord d'attaque étant dirigé radialement vers l'intérieur par rapport au bord de fuite.

6. Système selon l'une quelconque des revendications 1 à 5, comprenant en outre un guide d'admission fixe (300) présent à l'intérieur de la virole (210) de l'élément d'obturation sélective (200) du côté de la première portion (211) dudit élément d'obturation, le guide d'admission comportant un cylindre central (301) prolongé radialement par un disque (302), le cylindre et le disque formant un déflecteur configuré pour guider l'air arrivant sur le guide d'admission en direction des ports d'admission (102) des chambres de combustion (100).

7. Système selon la revendication 6, dans lequel le guide d'admission fixe (300) comporte en outre une pluralité de lumières (303) aptes à coopérer avec chaque lumière de contournement (223, 224) de la paroi (220) de l'élément d'obturation sélective (200).

8. Système selon l'une quelconque des revendications 1 à 7, dans lequel chaque chambre de combustion (100) est délimitée par une enceinte (101), un fond arrière fermé (100b) solidaire de l'enceinte et un anneau cylindrique (110) sur la face externe (112) duquel l'enceinte est fixée, l'anneau cylindrique (110) formant un fond avant (100a) de chaque chambre de combustion, l'anneau cylindrique comportant une première série de lumières (113) formant chacune un port d'admission (102) d'une chambre de combustion (100) et une deuxième série de lumières (114) formant chacune un port d'échappement (103) d'une chambre de combustion,
le système comprenant en outre un collecteur d'échappement fixe (400) qui s'étend de manière annulaire à l'intérieur de la virole (210) de l'élément d'obturation sélective (200) le long de la deuxième portion (212) de ladite virole, le collecteur d'échappement comportant une pluralité de caissons cloisonnés (410) présents chacun au niveau d'un port d'échappement (103) d'une chambre de combustion (100).

9. Système selon la revendication 8, dans lequel chaque lumière de la deuxième série (114) de lumières est séparée circonférentiellement de sa voisine d'une distance (e) non nulle, la lumière d'échappement (2120, 2121) comprenant une pluralité de segments (2120a, 2121a) répartis uniformément dans ladite lumière et séparés entre eux d'une distance (P) inférieure ou égale à la distance (e) séparant deux lumières de la deuxième série de lumières.

10. Système selon l'une quelconque des revendications 1 à 9, comprenant dix chambres de combustion (100₁-100₁₀) réparties de manière annulaire autour de l'axe (XX'), la virole (210) de l'élément d'obturation sélective (200) comportant deux lumières d'admission (2110, 2111) diamétralement opposées sur la première portion annulaire (211) et deux lumières d'échappement (2120, 2121) diamétralement opposées sur la deuxième portion annulaire (212) de ladite virole, la paroi (220) de l'élément d'obturation sélective comportant deux lumières de contournement (223, 224) s'étendant sur une zone angulaire située en dehors des zones angulaires sur lesquelles s'étendent les deux lumières d'admission et les deux lumières d'échappement.

11. Système selon l'une quelconque des revendications 1 à 10, dans lequel l'élément d'obturation sélective (200) est réalisé en l'un des matériaux suivants : matériau métallique, matériau composite à matrice céramique et matériau céramique eutectique.

12. Turbomachine (10) comprenant un compresseur axial ou centrifuge et une turbine axiale ou centripète, la turbomachine comprenant en outre un système de combustion (1) selon l'une quelconque des revendications 1 à 11, le système de combustion étant présent entre le compresseur et la turbine.

13. Aéronef comprenant au moins un turbopropulseur, le turbopropulseur comprenant une turbomachine selon la revendication 12.

## Patentansprüche

1. Verbrennungssystem mit konstantem Volumen (1) für eine Turbomaschine (10) umfassend:
eine Vielzahl von Brennkammern (100), die ringförmig um eine Achse (XX') verteilt sind, die eine axiale Richtung (DA) definiert, wobei jede Brennkammer eine Einlassöffnung (102) und eine Auslassöffnung (103) umfasst,
ein selektives Verschlusselement (200), das in Bezug auf die Brennkammern um die Achse drehbar ist, wobei das selektive Verschlusselement einen Klemmring (210) gegenüber den Einlass- und Auslassöffnungen der Brennkammern umfasst, wobei der Klemmring auf einem ersten ringförmigen Abschnitt (211) mindestens einen Einlasskanal (2110, 2111) umfasst, der dazu bestimmt ist, bei der Drehung des selektiven Verschlusselements mit der Einlassöffnung jeder Brennkammer zusammenzuwirken, und auf einem zweiten ringförmigen Abschnitt (212) mindestens einen Auslasskanal (2120, 2121) umfasst, der dazu bestimmt ist, bei der Drehung des selektiven Verschlusselements mit der Auslassöffnung jeder Brennkammer zusammenzuwirken, wobei sich jeder Einlasskanal und jeder Auslasskanal über eine bestimmte Länge in einer Umfangsrichtung in Bezug auf die Achse erstrecken,
**dadurch gekennzeichnet, dass** jeder Einlasskanal und jeder Auslasskanal durch mindestens ein Segment (2110a, 2111a, 2120a, 2121a) segmentiert sind, das sich in jedem Kanal in der axialen Richtung (DA) erstreckt, und dass sich jedes Segment nur in der Dicke der Wand des Klemmrings des selektiven Verschlusselements dehnt, und dass das selektive Verschlusselement (200) ferner eine Wand (220) umfasst, die sich von der Innenseite (210a) des Klemmrings (210) in einer radialen Richtung (DR) erstreckt und den ersten (211) und den zweiten (212) ringförmigen Abschnitt des Klemmrings trennt, wobei die Wand mindestens einen Umgehungskanal (223, 224) aufweist, das sich über einen Winkelbereich erstreckt, der außerhalb der Winkelbereiche liegt, über die sich der mindestens eine Einlasskanal (2110, 2111) und der mindestens eine Auslasskanal (2120, 2121) erstrecken, wobei der mindestens eine Umgehungskanal winkelmäßig durch mindestens ein Segment segmentiert ist (223a, 224a), das sich in einer radialen Richtung in Bezug auf die Achse (XX') erstreckt.

2. System nach Anspruch 1, wobei jedes Segment (2120a, 2121a) jedes Auslasskanals in einer Ebene senkrecht zur Achse (XX') ein aerodynamisches Profil aufweist, das sich zwischen einer Vorderkante (2120b, 2121b) und einer Hinterkante (2120c, 2121c) erstreckt, wobei die Vorderkante in Bezug auf die Hinterkante radial nach außen gerichtet ist.

3. System nach Anspruch 2, wobei jeder Auslasskanal (2120) gleichmäßig durch eine Vielzahl von Gruppen von unterschiedlicher Segmente (2120a₁-2120a₅) segmentiert ist, von denen jedes Segment (2120a) einer gleichen Gruppe einen identischen Anstellwinkel (a) aufweist, wobei sich der Anstellwinkel der Segmente einer gleichen Segmentgruppe streng monoton von einer Segmentgruppe zur anderen entlang des Auslasskanals entwickelt.

4. System nach Anspruch 2, wobei jeder Auslasskanal (2120) gleichmäßig durch eine Vielzahl von Segmenten (2120a) segmentiert ist, die jeweils einen unterschiedlichen Anstellwinkel (a) aufweisen, wobei sich der Anstellwinkel jedes Segments streng monoton von einem Segment zum anderen entlang des Auslasskanals entwickelt.

5. System nach einem der Ansprüche 1 bis 4, wobei jedes Segment (2110a, 2111a) des Einlasskanals (2110, 2111) in einer Ebene senkrecht zur Achse (XX') ein aerodynamisches Profil aufweist, das sich zwischen einer Vorderkante (2110b, 2111b) und einer Hinterkante (2110c, 2111c) erstreckt, wobei die Vorderkante in Bezug auf die Hinterkante radial nach innen gerichtet ist.

6. System nach einem der Ansprüche 1 bis 5, das außerdem eine feste Einlassführung (300) umfasst, die im Inneren des Klemmrings (210) des selektiven Verschlusselements (200) auf der Seite des ersten Abschnitts (211) des Verschlusselements vorhanden ist, wobei die Einlassführung einen zentralen Zylinder (301) umfasst, der radial durch eine Scheibe verlängert wird (302), wobei der Zylinder und die Scheibe einen Deflektor bilden, der so konfiguriert ist, dass er die auf die Einlassführung einströmende Luft in Richtung der Einlassöffnungen (102) der Brennkammern (100) leitet.

7. System nach Anspruch 6, wobei die feste Einlassführung (300) ferner eine Vielzahl von Kanälen (303) aufweist, die geeignet sind, mit jedem Umgehungskanal (223, 224) der Wand (220) des selektiven Verschlusselements (200) zusammenzuwirken.

8. System nach einem der Ansprüche 1 bis 7, wobei jede Brennkammer (100) von einem Gehäuse (101), einem geschlossenen hinteren Boden (100b), der fest mit dem Gehäuse verbunden ist, und einem zylindrischen Ring (110) begrenzt wird, an dessen Außenseite (112) das Gehäuse befestigt ist, wobei der zylindrische Ring (110) einen vorderen Boden (100a) jeder Brennkammer bildet, wobei der zylindrische Ring eine erste Reihe von Kanälen (113), die jeweils eine Einlassöffnung (102) einer Brennkammer (100) bilden, und eine zweite Reihe von Kanälen (114), die jeweils eine Auslassöffnung (103) einer Brennkammer bilden, umfasst,
wobei das System ferner einen festen Abgaskrümmer (400) umfasst, der sich ringförmig innerhalb des Klemmrings (210) des selektiven Verschlusselements (200) entlang des zweiten Abschnitts (212) des Klemmrings erstreckt, wobei der Abgaskrümmer eine Vielzahl von unterteilten Kästen (410) aufweist, die jeweils an einer Auslassöffnung (103) einer Brennkammer (100) vorhanden sind.

9. System nach Anspruch 8, wobei jeder Kanal der zweiten Reihe (114) von Kanälen in Umfangsrichtung von seinem Nachbarn durch einen Abstand (e) ungleich null getrennt ist, wobei der Auslasskanal (2120, 2121) eine Vielzahl von Segmenten (2120a, 2121a) umfasst, die gleichmäßig in dem Kanal verteilt sind und voneinander durch einen Abstand (P) getrennt sind, der kleiner oder gleich dem Abstand (e) ist, der zwei Kanäle der zweiten Reihe von Kanälen voneinander trennt.

10. System nach einem der Ansprüche 1 bis 9, umfassend zehn Brennkammern (100₁-100₁₀), die ringförmig um die Achse (XX') verteilt sind, wobei der Klemmring (210) des selektiven Verschlusselements (200) zwei diametral gegenüberliegende Einlasskanäle (2110, 2111) auf dem ersten ringförmigen Abschnitt (211) und zwei diametral gegenüberliegende Auslasskanäle (2120, 2121) auf dem zweiten ringförmigen Abschnitt (212) des Klemmrings aufweist, die Wand (220) des selektiven Verschlusselements zwei Umgehungskanäle (223, 224) aufweist, die sich über einen Winkelbereich erstrecken, der außerhalb der Winkelbereiche liegt, über die sich die beiden Einlasskanäle und die beiden Auslasskanäle erstrecken.

11. System nach einem der Ansprüche 1 bis 10, wobei das selektive Verschlusselement (200) aus einem der folgenden Materialien hergestellt ist: metallisches Material, Verbundmaterial mit Keramikmatrix und eutektisches Keramikmaterial.

12. Turbomaschine (10) mit einem axialen oder zentrifugalen Verdichter und einer axialen oder zentripetalen Turbine, wobei die Turbomaschine ferner ein Verbrennungssystem (1) nach einem der Ansprüche 1 bis 11 umfasst, wobei das Verbrennungssystem zwischen dem Verdichter und der Turbine angeordnet ist.

13. Luft mit mindestens einem Turboprop-Triebwerk, wobei das Turboprop-Triebwerk eine Turbomaschine nach Anspruch 12 umfasst.

## Claims

1. A constant-volume combustion system (1) for a turbomachine (10) comprising:
a plurality of combustion chambers (100) distributed in an annular manner about an axis (XX') defining an axial direction (DA), each combustion chamber comprising an intake port (102) and an exhaust port (103),
a selective closure member (200) rotationally movable about the axis with respect to the combustion chambers, the selective closure member comprising a ferrule (210) facing the intake and exhaust ports of the combustion chambers, the ferrule containing on a first annular section (211) at least one intake aperture (2110, 2111) intended to cooperate with the intake port of each combustion chamber during the rotation of the selective closure member and on a second annular section (212) at least one exhaust aperture (2120, 2121) intended to cooperate with the exhaust port of each combustion chamber during the rotation of the selective closure member, each intake aperture and each exhaust aperture extending over a determined length in a circumferential direction with respect to the axis,
**characterized in that** each intake aperture and each exhaust aperture are segmented by at least one segment (2110a, 2111a, 2120a, 2121a) extending in each aperture in the axial direction (DA), **in that** each segment extends only in the thickness of the wall of the ferrule of the selective closure member, and **in that** the selective closure member (200) further comprises a wall (220) extending from the internal face (210a) of the ferrule (210) in a radial direction (DR) and separating the first (211) and second (212) annular sections of the ferrule, said wall containing at least one bypass aperture (223, 224) extending over an angular area located outside the angular areas over which extend said at least one intake aperture (2110, 2111) and said at least one exhaust aperture (2120, 2121), said at least one bypass aperture being angularly segmented by at least one segment (223a, 224a) extending in a radial direction with respect to the axis (XX').

2. The system as claimed in claim 1, wherein each segment (2120a, 2121a) of each exhaust aperture has, in a plane perpendicular to the axis (XX'), an aerodynamic profile extending between a leading edge (2120b, 2121b) and a trailing edge (2120c, 2121c), the leading edge being radially directed outward with respect to the trailing edge.

3. The system as claimed in claim 2, wherein each exhaust aperture (2120) is uniformly segmented by a plurality of different groups of segments (2120a₁-2120a₅) wherein each segment (2120a) of one and the same group has an identical angle of attack (α), the angle of attack of the segments of one and the same group of segments varying in a strictly monotonic manner from one group of segments to the other along the exhaust aperture.

4. The system as claimed in claim 2, wherein each exhaust aperture (2120) is uniformly segmented by a plurality of segments (2120a) each having a different angle of attack (α), the angle of attack of each segment varying in a strictly monotonic manner from one segment to the other along the exhaust aperture.

5. The system as claimed in any of claims 1 to 4, wherein each segment (2110a, 2111a) of the intake aperture (2110, 2111) has, in a plane perpendicular to the axis (XX'), an aerodynamic profile extending between a leading edge (2110b, 2111b) and a trailing edge (2110c, 2111c), the leading edge being radially directed inward with respect to the trailing edge.

6. The system as claimed in any of claims 1 to 5, further comprising a fixed intake guide (300) present on the inside of the ferrule (210) of the selective closure member (200) on the side of the first section (211) of said closure member, the intake guide containing a central cylinder (301) radially extended by a disc (302), the cylinder and the disc forming a deflector configured to guide the air arriving on the intake guide in the direction of the intake ports (102) of the combustion chambers (100).

7. The system as claimed in claim 6, wherein the fixed intake guide (300) further contains a plurality of apertures (303) capable of cooperating with each bypass aperture (223, 224) of the wall (220) of the selective closure member (200).

8. The system as claimed in any of claims 1 to 7, wherein each combustion chamber (100) is delimited by an enclosure (101), a closed rear bottom (100b) forming a single part with the enclosure and a cylindrical ring (110) to the external face (112) of which the enclosure is attached, the cylindrical ring (110) forming a front bottom (100a) of each combustion chamber, the cylindrical ring containing a first series of apertures (113) each forming an intake port (102) of a combustion chamber (100) and a second series of apertures (114) each forming an exhaust port (103) of a combustion chamber,
the system further comprising a fixed exhaust manifold (400) which extends in an annular manner inside the ferrule (210) of the selective closure member (200) along the second section (212) of said ferrule, the exhaust manifold containing a plurality of partitioned compartments (410) each present at the level of an exhaust port (103) of a combustion chamber (100).

9. The system as claimed in claim 8, wherein each aperture of the second series (114) of apertures is circumferentially separated from its neighbor by a non-zero distance (e), the exhaust aperture (2120, 2121) comprising a plurality of segments (2120a, 2121a) uniformly distributed in said aperture and mutually separated by a distance (P) less than or equal to the distance (e) separating two apertures of the second series of apertures.

10. The system as claimed in any of claims 1 to 9, comprising ten combustion chambers (100₁-100₁₀) distributed in an annular manner around the axis (XX'), the ferrule (210) of the selective closure member (200) containing two diametrically opposed intake apertures (2110, 2111) on the first annular section (211) and two diametrically opposed exhaust apertures (2120, 2121) on the second annular section (212) of said ferrule, the wall (220) of the selective closure member containing two bypass apertures (223, 224) extending over an angular area located outside the angular areas over which extend the two intake apertures and the two exhaust apertures.

11. The system as claimed in any of claims 1 to 10 wherein the selective closure member (200) is made from one of the following materials: metallic material, ceramic-matrix composite material and eutectic ceramic material.

12. A turbomachine (10) comprising an axial or centrifugal compressor and an axial or centripetal turbine, the turbomachine further comprising a combustion system (1) as claimed in any of claims 1 to 11, the combustion system being present between the compressor and the turbine.

13. An aircraft comprising at least one turbo-propeller engine, the turbo-propeller engine comprising a turbomachine as claimed in claim 12.
